# EUROPÄISCHE PATENTSCHRIFT

(11) **EP 0 542 007 B1**
(45) Veröffentlichungstag und Bekanntmachung des Hinweises auf die Patenterteilung: **14.12.1994**
(21) Anmeldenummer: 92118060.0
(22) Anmeldetag: 22.10.1992
(51) Int. Cl.: B23Q 3/10

(54) **Vorrichtung zum mittelbaren Verbinden von Konstruktionsprofilen und/oder vergleichbarer Teile, insbesondere für flexible Montagesysteme**
Device to link constructional profiles and/or similar parts, especially for flexible assembly systems
Dispositif de liaison de profilés de construction et/ou de pièces semblable, spécialement pour des systèmes d'assemblage flexibles

(30) Priorität: 14.11.1991 DE 9114169 U
(43) Veröffentlichungstag der Anmeldung: 19.05.1993
(73) Patentinhaber: GRÄSSLIN KG, D-78112 St. Georgen (DE)
(72) Erfinder: Mayer, Edgar, W-7742 St.Georgen (DE); Spath, Rainer, W-7740 Triberg (DE)
(74) Vertreter: Thoma, Friedrich, Dipl.-Ing.(FH)

(56) Entgegenhaltungen:
- EP-A- 0 162 730
- AU-A- 7 514 474
- DE-U- 9 010 898

## Beschreibung

Die Erfindung betrifft eine Vorrichtung mit den Merkmalen nach dem Oberbegriff des Schutzanspruchs 1.

Bei derartigen Vorrichtungen zum mittelbaren Verbinden von Konstruktionsprofilen und/oder vergleichbarer Teile, insbesondere von Maschinenteilen oder Handlingsgeräten miteinander, die auf einer Profilbasis aufgebaut sind, ist es erforderlich, daß die Vorrichtung nicht nur mit Lager-, Fixier- und kraftschlüssigen, lösbaren Befestigungsmittel versehen ist und/oder nachgerüstet werden kann, sondern daß dort auch Einrichtungen vorgesehen oder angeordnet werden können, die es ermöglichen das zu verbindende Teil, vor der endgültigen kraftschlüssigen Befestigung, auf der Vorrichtung zunächst selbsthaltend zu fixieren und in der Lage der Teile zueinander zu sichern. Dabei soll sichergestellt sein, daß die Vorrichtung einfach, zuverlässig und sicher vormontiert und justiert werden kann und daß die daraufhin vorgesehene kraftschlüssige Befestigung eines Konstruktionsprofils und/oder von anderweitigen Teilen rationell und wirtschaftlich durchführbar ist.

Aus dem DE-GM 90 10 898.1 ist ein Verbindungsteil für Konstruktionsprofile von flexiblen Montagesystemen bekannt, das im wesentlichen aus einem plattenförmigen Verbindungsteil besteht, auf dem einerseits, insbesondere auf beiden, einander gegenüberliegenden Oberflächen, zylinderförmige Einsenkungen mit jeweils dazu koaxial vorgesehenen Gewindelöchern für den wahlweisen Eingriff von Führungsstücken angeordnet sind und auf dem andererseits Befestigungslöcher für den Durchgriff von Schrauben zur Befestigung von Spannleisten vorgesehen sind. Dabei sind in den Führungsstücken federbelastet gelagerte Rastrollen vorgesehen, zur selbsthaltenden Fixierung eines zu verbindenen und zu befestigenden Konstruktionsprofils oder eines anderweitigen, mit einem Profil versehenen Trägers. Diese Führungsstücke mit den federbelastet gelagerten Rastrollen sind in der Herstellung relativ aufwendig und teuer. Außerdem war dort die, auf die Rastrollen einwirkende Federkraft bei einer Vielzahl von anwendungskonformen Verbindungsfällen zu gering, sodaß dort eine zuverlässige Fixierung nicht mehr gewährleistet war.

Der Erfindung liegt die Aufgabe zugrunde eine Vorrichtung zum mittelbaren Verbinden von Konstruktionsprofilen und/oder vergleichbarer Teile miteinander zu schaffen, die die Nachteile des bekannten vorgenannten Verbindungsteils beseitigt, und die eine zuverlässige mittelbare, insbesondere rechtwinkelige, Verbindung der vorgesehenen Teil, mit großer Wiederholgenauigkeit und Steifigkeit, ermöglicht.

Diese Aufgabe wird mit den Merkmalen im kennzeichenden Teil des Schutzanspruchs 1 gelöst und in den Unteransprüchen sind weitere vorteilhafte Einzelheiten beansprucht.

Vorteilhaft bei dieser Vorrichtung ist nicht nur der Einsatz eines mit einer federnden Rastnase versehen Fixierelementes, das einerseits senkrecht und kraftschlüssig sowohl auf der Vorderseite, als auch auf der Rückseite der Verbindungsplatte angeordnet ist und das andererseits zusammen mit der Rastnase mit einem zu verbindenden Profil, insbesondere mit einer dort vorgesehenen, längsverlaufenden T-förmigen Profilnut, in Eingriff steht, sondern auch die mit diesem Fixierelement erzielbare hohe Montagewiederholbarkeit und Steifigkeit zweier, zueinander mittelbar fixierter Konstruktionsprofile. Vorteilhaft ist dort ferner der zusätzliche Einsatz von an sich bekannter Spannleisten und/oder von Nutmuttern in Verbindung mit Befestigungsschrauben, zur kraftschlüssigen Befestigung der Konstruktionsprofile und/oder vergleichbaren Teile zueinander.

Ausführungs- und Anwendungsbeispiele der neuen Vorrichtung sind in den Zeichnungen dargestellt und werden im folgenden näher erläutert. Es zeigen
Fig. 1 eine schaubildliche Seitenansicht auf eine Verbindungsplatte mit den dort zum Einsatz kommenden Fixierelementen und Spannleisten,
Fig. 2 eine Vorderansicht auf eine Spannplatte mit dort kraftschlüssig auf der Vorder- und der Rückseite vorgesehenen Fixierelementen,
Fig. 3 eine Vorderansicht auf ein neues Fixierelement,
Fig. 4 eine Draufsicht auf ein Fixierelement nach Fig. 3,
Fig. 5 eine Seitenteilschnittansicht eines Fixierelement nach Fig. 3 und 4,
Fig. 6 eine Seitenteilschnittansicht auf eine Verbindung zweier flachliegender und im rechten Winkel zueinander angeordneter Konstruktionsprofile,
Fig. 7 eine Draufsicht auf die Verbindungsanordnung nach Fig. 6,
Fig. 8 eine Seitenteilschnittansicht auf eine Verbindung zweier hochkant und im rechten Winkel zueinander angeordneter Konstruktionsprofile,
Fig. 9 eine Draufsicht auf die Verbindungsanordnung nach Fig. 8
Fig. 10 eine Teilschnittansicht durch den Eingriff eines Fixierelementes mit einem Konstruktionsprofil,
Fig. 11 eine Seitenteilansicht auf eine Fixierung eines Konstruktionsprofils auf einer Verbindungsplatte mittels eines Fixierelementes,
Fig. 12 eine Teilschnittansicht einer kraftschlüssigen Befestigung eines Konstruktionsprofils auf einer Verbindungsplatte mittels einer Spannleiste mit Befestigungsschraube und
Fig. 13 eine Seitenteilschnittansicht einer kraftschlüssigen Befestigung eines Konstruktionsprofils auf einer Verbindungsplatte mittels einer sogenannten Nutmutter mit Befestigungsschraube.

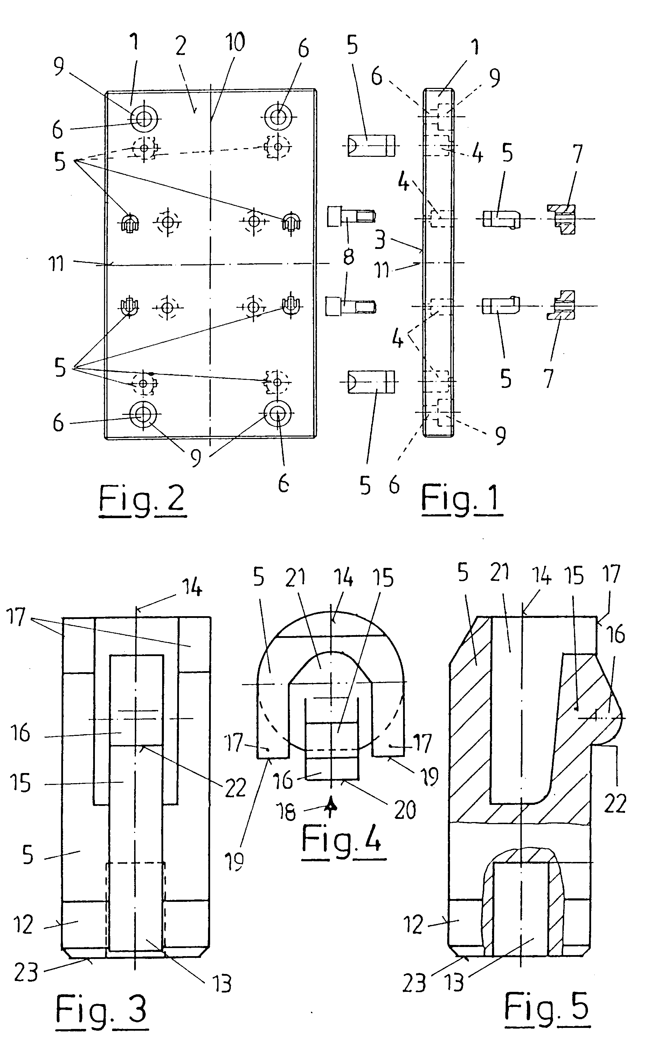

Die Fig. 1 und 2 zeigen im einzelnen eine Verbindungsplatte 1, die sowohl auf der Vorderseite 2, als auch auf der Rückseite 3 mit Sacklöchern 4 versehen ist, für den kraftschlüssigen Einbau von Fixierelementen 5. Außerdem sind auf der Verbindungsplatte 1 Befestigungslöcher 6 für den Eingriff der Befestigungsschrauben 8 für die Spannleisten 7, sowie die zu den Befestigungslöchern 6 auf der jeweiligen Seite koaxial vorgesehenen Einsenkungen 9 für die Köpfe der Befestigungsschrauben 8 angeordnet.

Wie aus den Fig. 1 und 2 ersichtlich, sind insbesondere die Fixierelemente 5 und die Befestigungslöcher 6 für die Spannleisten 7 auf der Vorderseite 2 und der Rückseite 3 jeweils fluchtend zueinander angeordnet. Dabei verläuft die Mittelachse 10 zwischen den Fixierlementen 5 auf der Vorderseite 2 insbesondere um 90^{o} versetzt zur Mittelachse 11 der Fixierelemente 5 auf der Rückseite 3 der Verbindungsplatte 1.

Die Fig. 3, 4 und 5 zeigen das neue Fixierelement 5, das insbesondere aus einem Kunststoff hergestellt ist. Das Fixierelement 5 besteht im wesentlichen rückseitig aus einem einseitigen, paßgenauen zylindrischen Flansch 12 für den Eingriff mit den Sacklöchern 4 auf der Verbindungsplatte 1 nach Fig. 1 und 2. 13 bezeichnet ein zum Flansch 12 koaxiales Sackloch auf der Rückseite des Fixierelementes 5.

Dem Flansch 12 axial entgegengesetzt ist das Fixierelement 5 mit einer einseitig axialverlaufend angeordneten, senkrecht zur Achse 14 gefederten Rastklinke 15 versehen, die mit einer, insbesondere gerundeten Rastnase 16 ausgestattet ist. 17 bezeichnet Anschlagstege, die im Bereich der Vorderseite 18, beidseitig zur Rastklinke 15 angeordnet sind und deren Vorderseiten 19 insbesondere mit der Stirnkante 20 der Rastklinke 15 fluchten. 21 kennzeichnet einen axialverlaufenden Freiraum im Bereich der einseitig verlaufenden Rastklinke 15.

Die Abmessungen dieses neuen Fixierelementes 5, gemäß den Fig. 3, 4 und 5, können erforderlichenfalls beliebig groß sein. Insbesondere das Maß x entsprechend der Höhe der Rastnasenunterkante 22 zur Unterseite 23, sowie der Durchmesser des Flansches 12 stehen in direkter Abhängigkeit zum jeweiligen zu fixierenden Konstruktionsprofil. Außerdem kann das neue Fixierelement 5 aus jedem erforderlichen oder zweckmäßigen, auch aus einem metallischen, Werkstoff hergestellt sein.

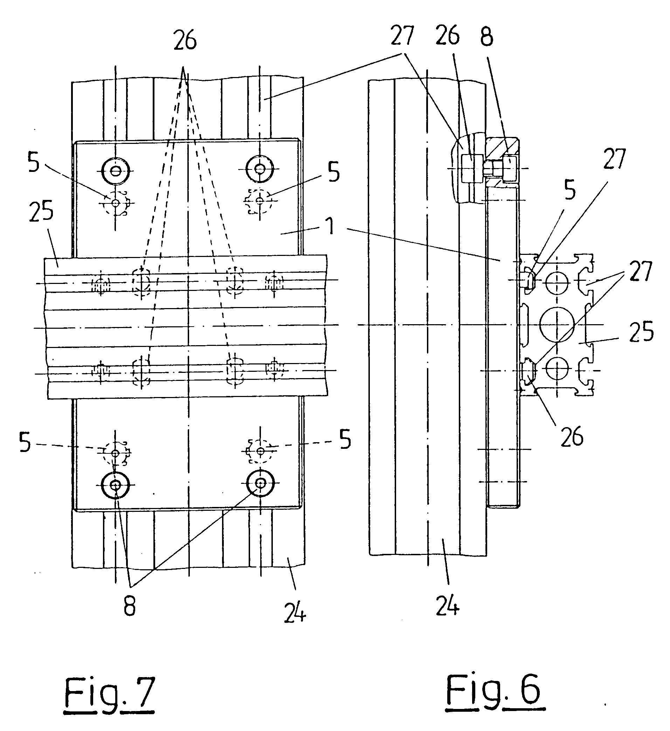

Die Fig. 6 bis 9 zeigen mittelbare Verbindungen von im rechten Winkel zueinander angeordneter, einen rechtwinkeligen Querschnitt aufweisender, unterschiedlich großer Konstruktionsprofile 24 und 25. 1 bezeichnet die Verbindungsplatte 1 mit den dort vorgesehenen Fixierelementen 5. 8 zeigt Befestigungsschrauben zur kraftschlüssigen Befestigung der Konstruktionsprofile 24, 25 auf der Verbindungsplatte 1, die in Spannleisten 7 und/oder mit Nutmuttern 26 eingreifen.

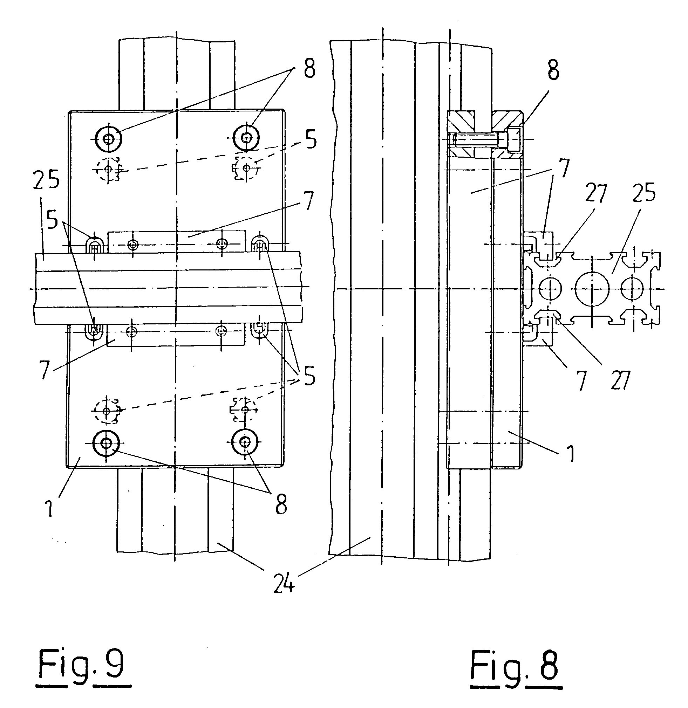

Die Fig. 6 und 7 zeigen dort eine mittelbare Verbindung zweier zueinander flachliegend angeordneter Konstruktionsprofile 24 und 25, im Gegensatz zu den Fig. 8 und 9, bei denen die Konstruktionsprofile 24 und 25 beide hochkant zueinander angeordnet sind.

Die Konstruktionsprofile 24, 25 werden dort zunächst mit den Fixierelementen 5 auf der Verbindungsplatte 1 rastend in Eingriff gebracht und in der jeweiligen Profillängsrichtung ausgerichtet. Die nachfolgende kraftschlüssige Befestigung der einzelnen Konstruktionsprofile 24, 25 auf der Verbindungsplatte 1 erfolgt dann, gamäß der Ausführung nach Fig. 6 und 7, mittels Nutmuttern 26, die mit den T-förmigen Profilnuten 27 in Eingriff stehen, und den, in die Nutmuttern 26 eingreifenden, Befestigungsschrauben 8, oder wie aus der Fig. 8 und 9 ersichtlich, mittels Spannleisten 7 die einseitig von außen, mit den T-förmigen Profilnuten 27 der Konstruktionsprofile 24, 25 In Eingriff stehen. Zweckmäßigerweise sind zur Fixierung und Befestigung pro Konstruktionsprofil 24, 25 je vier Fixierelmente 5 und je vier Nutmuttern 26 mit entsprechenden Befestigungsschrauben 8 vorgesehen. Zur Befestigung der Konstruktionsprofile 24, 25 mittels Spannleisten 7 genügen pro Profil zwei, einander gegenüberliegende Spannleisten 7.

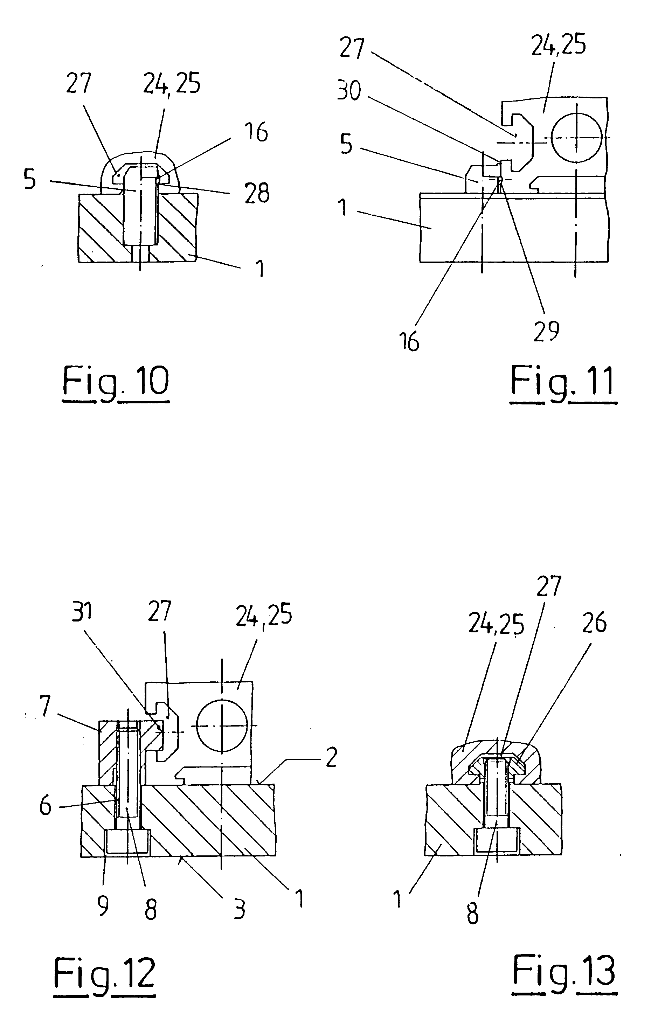

Die Fig. 10 und 11 zeigen Eingriffsbeispiele eines Fixierelementes 5 mit einem entsprechenden Konstruktionsprofil 24 oder 25. Beim Beispiel nach Fig. 10 greift das Fixierelement 5 unmittelbar in die T-förmige Profilnut 27 eines Konstruktionsprofils 24, 25 ein. Dabei greift die Rastnase 16 der Rastklinke 15 hinter die eine Innenkante 28 der Profilnut 27.

Bei dem anderen Eingriffsbeispiel, gemäß der Fig. 11 greift dagegen die Rastnase 16 in eine Profillängsverlaufende, insbesondere halbrunde Nut 29 , welche insbesondere an der Schmalseite 30 an einem Konstruktionsprofil 24, 25, der Profilaußenkante parallelverlaufend benachbart, angeordnet ist. 1 bezeichnet die Verbindungsplatte.

Die Fig. 12 zeigt die kraftschlüssige Befestigung eines Konstruktionsprofils 24, 25 auf der Verbindungsplatte 1 mittels einer Spannleiste 7. 8 kennzeichnet die Befestigungsschraube, deren Kopf in den entsprechenden Einsenkungen 9 der Platte 1 versenkt ist. 6 bezeichnet das Befestigungsloch. Der einseitige Flansch 31 der Spannleiste 7 greift dort unmittelbar in die T-förmige Profilnut 27 des Konstruktionsprofils 24, 25 ein und zieht das Profil auf die jeweilige Vorder- 2 oder Rückseite 3 der Verbindungsplatte 1.

Eine weitere, bereits zuvor beschriebene kraftschlüssige Befestigungsmöglichkeit zeigt die Fig. 13. Dort bezeichnet 1 die Verbindungsplatte, 24, 25 ein Konstruktionsprofil und 26 eine Nutmutter, die in eine T-förmige Profilnut 27 eingeschoben ist. 8 ist eine Befestigungsschraube.

## Patentansprüche

1. Vorrichtung zum mittelbaren Verbinden von Konstruktionsprofilen (24, 25) und/oder vergleichbarer, mit einem Profil versehener Teile, mit einer Verbindungsplatte (1), auf deren Vorder- (2) und Rückseite (3) sowohl Fixierelemente (5) eingepreßt, als auch Befestigungslöcher (6) für den Einsatz von Befestigungsschrauben (8) vorgesehen sind, wobei die Konstruktionsprofile (24, 25) und/oder vergleichbaren Teile zunächst von den Fixierelementen (5), die Rastelemente besitzen und auf der Rückseite mit einem einseitigen, paßgenauen zylindrischen Flansch (12) ausgestattet sind, hinreichend lagenfixiert und gehalten und die nach dem Ausrichten mittels Spannleisten (7) und/oder mittels Nutmuttern (26) und Befestigungsschrauben (8), die in die Spannleisten (7) und die Nutmuttern (26) eingreifen, kraftschlüssig auf der Verbindungsplatte (1) befestigt sind, insbesondere für flexible Montagesysteme, **dadurch gekennzeichnet,** daß das Fixierelement (5) vorderseitig mit einer einseitig axial verlaufenden, senkrecht zur Längsachse (14) des Fixierelementes (5) federnd und mit dem Fixierelement (5) einstückig ausgebildeten Rastklinke (15) versehen ist.

2. Vorrichtung nach Anspruch 1, dadurch gekennzeichnet, daß die Rastklinke (15) mit einer gerundeten Rastnase (16) versehen ist.

3. Vorrichtung nach Anspruch 1 und 2, dadurch gekennzeichnet, daß beidseitig zur Rastklinke (15), im Bereich der Vorderseite (18), Anschlagstege (17) erhaben am Umfang des Fixierelementes (5) angeordnet sind, deren Vorderseiten (19) insbesondere mit der Stirnkante (20) der Rastklinke (15) fluchten.

4. Vorrichtung nach Anspruch 1 bis 3, dadurch gekennzeichnet, daß das Fixierelement (5) einstückig, insbesondere aus einem Kunststoff, oder aus einem sonstigen geeigneten oder erforderlichen Werkstoff hergestellt ist.

## Claims

1. Device for indirect connection of structural profiles (24, 25) and/or comparable profiled parts, with a connecting plate (1) on the front (2) and the rear (3) of which both fixing elements (5) are pressed in and retaining holes (6) are provided for insertion of retaining bolts (8), with which the structural profiles (24, 25) and/or comparable parts are initially adequately fixed in position and held by the fixing elements (5) which have latching elements and on the rear are equipped with a precision-fit cylindrical flange (12) on one side and which after alignment are secured on the connecting plate (1) in a force-locking manner by means of clamping strips (7) and/or by means of slot nuts (26) and retaining bolts (8) which engage in the clamping strips (7) and the slot nuts (26), in particular for flexible assembly systems, characterised in that on the front the fixing element (5) is provided with a latch (15) which runs axially on one side, is resilient at right-angles to the longitudinal axis (14) of the fixing element (5) and is made in one piece with the fixing element (5).

2. Device according to claim 1, characterised in that the latch (15) is provided with a rounded latching lug (16).

3. Device according to claims 1 and 2, characterised in that on both sides of the latch (15), in the area of the front side (18), stops (17) are disposed raised on the circumference of the fixing element (5) the front sides (19) of which are aligned in particular with the front edge (20) of the latch (15).

4. Device according to claims 1 to 3, characterised in that the fixing element (5) is produced in one piece, in particular in a plastic, or another suitable or necessary material.

## Revendications

1. Dispositif pour l'assemblage indirect de profilés (24, 25) pour la construction et/ou de pièces analogues munies d'un profil, comportant une plaque d'assemblage (1) sur les faces avant (2) et arrière (3) de laquelle sont, d'une part, intégrés par matriçage des éléments de fixation (5) et, d'autre part prévus des trous de fixation (6) pour l'insertion de vis de fixation (8), lesdits profilés (24, 25) et/ou pièces analogues étant tout d'abord fixés et maintenus suffisamment solidement dans leur position par les éléments de fixation (5) lesquels possèdent des éléments d'encliquetage et sont équipés sur leur face arrière d'une bride cylindrique ajustée unilatérale, ces éléments de fixation (5) pénétrant après leur alignement au moyen de tendeurs (7) et/ou d'écrous à gorge (26) et vis de fixation (8) qui pénètrent dans lesdits tendeurs (7) et dans lesdits écrous (26), étant fixés de manière solidaire sur la plaque d'assemblage (1), le dispositif étant destiné notamment à des systèmes de montage flexibles ; caractérisé en ce que l'élément de fixation (5) est muni sur la face avant d'un cliquet d'arrêt (15), s'étendant d'un seul côté axialement, élastique dans le sens perpendiculaire à l'axe longitudinal (14) dudit élément de fixation (5) avec lequel ledit cliquet (15) forme une seule pièce.

2. Dispositif selon la revendication 1, caractérisé en ce que le cliquet d'arrêt (15) est muni d'un ergot d'encliquetage (16) arrondi.

3. Dispositif selon les revendications 1 et 2, caractérisé en ce que des deux côtés du cliquet 15, au voisinage de la face avant 18, sont disposées des traverses de butée (17) qui font saillie sur le pourtour de l'élément de fixation (5) et dont les faces avant (19) sont alignées sur l'arête frontale (20) du cliquet (15).

4. Dispositif selon les revendications 1 à 3, caractérisé en ce que l'élément de fixation (5) est fabriqué en une seule pièce, en particulier en une matière synthétique ou en un autre matériau approprié ou imposé.
